# EUROPEAN PATENT SPECIFICATION

(11) **EP 3 728 710 B1**
(45) Date of publication and mention of the grant of the patent: **27.04.2022**
(21) Application number: 18833242.3
(22) Date of filing: 21.12.2018
(51) Int. Cl.: D01F 9/00, A01G 24/40

(54) **A FIBRE**
FASER
FIBRE

(30) Priority: 22.12.2017 NL 2020177
(43) Date of publication of application: 28.10.2020
(73) Proprietor: Furanix Technologies B.V., 1014 BV Amsterdam (NL)
(72) Inventor: VAN KLINK, Gerardus Petrus Maria, 1014 BV Amsterdam (NL); DE JONG, Edserd, 1014 BV Amsterdam (NL); HOOGEBOOM, Johannes Nicolaas, 9852 TD Warfstermolen (NL); KRAMER, Koen Johannes, 1014 BV Amsterdam (NL)
(74) Representative: Dijkhuis ev Boon, Anouk Hélène J.
(86) International application number: PCT/EP2018/086712
(87) International publication number: WO 2019/122385

(56) References cited:
- WO-A2-2007/104514
- JP-A- 2005 336 621
- US-A1- 2016 280 847
- US-A1- 2016 376 406

## Description

### FIELD OF THE INVENTION

The invention is directed to a novel fibre and a process to prepare the novel fibre.

### BACKGROUND OF THE INVENTION

Humins constitute a known material.

A chemically skilled person will be aware that the term humins can be used to refer to a certain class of organic compounds that, at least at room temperature, are essentially insoluble in water at all pH's.

The term humins is used in two related contexts, in soil chemistry and sugar chemistry. Although the term "humins" is used for both soil-derived humins as well as sugar-derived humins, the humins itself are actually quite different.

In the thesis of I. van Zandvoort, titled "Towards the valorization of humin by-products", published by the University of Utrecht, the Netherlands in 2015 (ISBN: 978-90-393-6291-4), it is explained that the soil-derived humin or humus fractions are expected to have a more complex structure than the humin by-products formed during acid catalyzed dehydration of sugars. For example, due to the incorporation of fatty acids, amino acids, lignin and inorganic materials, the soil-derived humins will have a higher nitrogen content than the humins obtained by means of a chemical, catalytical dehydration process of sugars.

JP2005336621 describes humic acid or humin produced by the degradation and/or decomposition of dead bodies of animals and plants in soil or under water. It mentions that such humic acid or humin can for example be obtained from peat. JP2005336621 further describes an acrylic-type synthetic fiber containing humic acid or humin containing a specific structure, which structure includes a high number of nitrogen atoms. It is mentioned that it is preferable to make it contain 2 to 30 weight %, with respect to an acrylic type polymer, as the content rate of humic acid or a humin. JP2005336621 explains that when 30 weight % is exceeded, the spinning property is influenced and stable production will become difficult.

An example of the type of humins obtained by means of a chemical, catalytical dehydration process of sugars are the humins obtained in the dehydration of carbohydrates in the manufacture of levulinic acid, 5-hydroxymethylfurfural and/or 5-alkoxymethylfurfural and/or acyloxymethyl-furfural. An example of such a dehydration reaction is described in DE3621517. Other examples of such a process are described in WO2007/104514 describing the preparation of alkoxymethylfurfural, and WO2007/104515, disclosing the preparation of acyloxymethyl-furfural. Although the latter processes have set out to reduce the yield of humins, the processes unavoidably yield amounts of humins for which an outlet is sought.

Possible uses for such humins are thermosetting adhesive compositions as described in US3293200, a fuel component as described in WO2016/130005 or a foam composed of humins as described in WO2017/074183. A foam is obtained by heating a humins-containing starting material at a temperature of 220 ºC, 230 ºC, 400 ºC and 450 °C according to this publication.

In the conference paper of Mija et al., presented at the First International Conference on Bio-based Building Materials of 22-24 June 2015 in Clermont-Ferrand, France the use of a polyfurfuryl alcohol (PFA)/humins thermoset resin for impregnating cellulosic fibres and/or cellulosic matrices are described.

There is, however, still room for alternative applications for such humins. The object of the present invention is to provide a novel application for such humins.

### SUMMARY OF THE INVENTION

It has now been found that one can prepare a fibre composed of humins, wherein the humins are derived from the dehydration of carbohydrates.

The invention therefore provides a fibre composed of humins, wherein the humins are obtained as a by-product in a process to prepare 5-methoxy-methylfurfural or 5-ethoxy-methylfurfural from a fructose and/or glucose-containing starting material with methanol or ethanol. Applicants found that fibres can be prepared from such humins. This is a novel application for such humins. Applicants are not aware that fibres have been prepared from such humins before.

Without wishing to be bound by any kind of theory, soil-derived humins are believed to be more attractive to fungi and molds and hence more prone to molding, whereas humins obtained during dehydration of carbohydrates can be used for a prolonged time, suitably weeks, months or even years, without molding.

The invention is also directed to a process to prepare fibres from humins by melt spinning of humins, wherein the humins are obtained as a by-product in a process to prepare 5-methoxy-methylfurfural or 5-ethoxy-methylfurfural from a fructose and/or glucose-containing starting material with methanol or ethanol. Advantageously even a fibre consisting essentially of such humins can be provided

Further advantages will be described below when describing the preferred embodiments of the invention.

### DETAILED DESCRIPTION OF THE INVENTION

The fibres are composed of humins. As explained, these humins can suitably be derived from the dehydration of carbohydrates, more suitably from the dehydration of a fructose/glucose mixture in methanol or ethanol, such as for example described in WO2007/104514. The fibres can be obtained by melt spinning of the humins. The fibres composed of humins are preferably obtainable by processes as described below.

Such processes will start using a source of humins.

Humins, derived from the dehydration of carbohydrates, are the coloured bodies which are believed to be polymers containing moieties from hydroxymethylfurfural, furfural, carbohydrate and levulinic acid. These coloured bodies are i.a. produced as by-products in the partial degrading of carbohydrates by heat or other processing conditions, as described in e.g. EP338151. Such humins are believed to be macromolecules containing furfural and hydroxymethylfurfural moieties. Further moieties that may be included in humins are carbohydrate, levulinate and alkoxymethylfurfural groups. A mechanism for the formation of humins molecules may be a polycondensation pathway, leading to a network of furan rings linked by ether and acetal bonds. A structure for humins is presented in I. van Zandvoort et al. ChemSusChem, 2013, 6, 1745 - 1758. In this journal article it is mentioned that the humins structure is characterized by furan rings connected via alkylene moieties. Thus, typical for humins are furan rings and alkylene groups, such as methylene and ethylene groups, whereas other constituent groups may be hydroxyl, aldehyde, ketone, carboxylic acid and ester groups. When the dehydration of the carbohydrates into furan derivatives is carried out in the presence of an alkanol other functional groups such as alkoxy and ester groups may be present.

The source of humins may also be characterized with reference to the Van Krevelen diagram. In such a diagram the hydrogen index, i.e. the atomic hydrogen:carbon ratio, and the oxygen index, i.e. the atomic oxygen:carbon ratio, are plotted against each other. Suitable humins have an oxygen:carbon atomic ratio in the range of 0.30 to 0.70, preferably from 0.40 to 0.60 and a hydrogen:carbon atomic ratio in the range of 0.60 to 1.60, preferably from 0.80 to 1.40.

The source of humins may also contain other elements, different from carbon, oxygen and hydrogen. Such elements may end up in the ash when the humins are combusted. Such elements may be present from natural sources, e.g. as trace elements for facilitating the growth of the plants from which the humins are derived. Some of the elements may also be introduced in the chemical process wherein the humins are produced as by-product. The main elements, though, are carbon, oxygen and hydrogen.

The source of humins may further comprise chemicals used in the process to prepare the humins. For example, in the dehydration of a carbohydrate, the humins fraction thus obtained may include monosaccharides which may be intermediate products or even feedstock compounds for the dehydration. Such monosaccharides may e.g. be glucose, fructose, or glycosides. The chemicals may also include end products such as 5-hydroxymethyl furfural, ethers or esters thereof, levulinic acid or esters thereof. Other chemicals are also feasible. The amounts in which these chemicals are present may vary significantly. Factors that may influence such amounts include the reaction conditions of the dehydration reaction and also the separation methods that are employed to separate the liquid end products from the viscous or even solid humins fraction. Suitably the source of humins contains from 45 to 100wt% of humins, preferably from 50wt% to 95wt%.

The humins are preferably derived from the dehydration of carbohydrates, such as cellulose, starch, sugars such as glucose, fructose and combinations thereof.

The above dehydration processes are typically used for the conversion of carbohydrates to levulinic acid or esters thereof, or 5-hydroxymethylfurfural or ethers thereof. Such processes have inter alia been described in the above-mentioned patent documents DE3621517, WO2007/104514 and WO2007/104515.

The humins are obtained as a by-product in a process, suitably a dehydration process, to prepare 5-methoxy-methylfurfural or 5-ethoxy-methylfurfural from a fructose and/or glucose - containing starting material with methanol or ethanol.

Preferably the humins are obtained as a by-product in a process, suitably a dehydration process, to prepare 5-methoxy-methylfurfural. Any fructose-containing starting material preferably includes fructose or a mixture of fructose and glucose. More preferably the carbohydrate feedstock is fructose optionally containing up to 10wt% glucose and preferably containing between 2wt% and 10wt% glucose.

The humins can advantageously be converted in a process comprising:
- preferably thermally treating the humins at a temperature of between 150 °C and 170 °C to obtain thermally treated humins; and
- melt spinning a fibre from the, preferably thermally treated, humins. Advantageously a fibre consisting essentially of humins can be provided.

Hence, the invention also provides a process to prepare a fibre by melt spinning of the humins. As explained above, the humins in such a process are obtained as a by-product in a process, suitably a dehydration process, to prepare 5-methoxy-methylfurfural or 5-ethoxy-methylfurfural from a fructose and/or glucose-containing starting material and methanol or ethanol, and still more preferably the humins in such a process are obtained as a by-product in a process to prepare 5-methoxy-methylfurfural. As explained in more detail below, the humins as obtained as by-product are preferably first thermally treated at a temperature between 150 and 170 °C and subsequently the fibre is obtained by melt spinning of the thermally treated humins.

The process to prepare 5-methoxy-methylfurfural or 5-ethoxy-methylfurfural is suitably performed by contacting the fructose and/or glucose-containing starting material with methanol or ethanol in the presence of a suitable, optionally homogeneous, acid catalyst. Such a process is further described and exemplified in the afore referred to WO2007104514. The source of humins may comprise between 1wt% and 25wt%, preferably between 8wt% and 25wt%, of 5-hydroxymethylfurfural (HMF) and between 1wt% and 20wt% of 5-methoxy-methylfurfural (MMF).

The humins are suitably first thermally treated at a treating temperature between 150 and 170 °C, and preferably between 155 and 165 °C, before using the humins to make a fibre. Suitably the fibre can be obtained by melt spinning of the thermally treated humins. The humins are preferably kept at this elevated temperature for between 55 and 65 minutes. It has been found that more stable fibres are obtained when the humins are thermally treated. Thermally treating the humins at a higher temperature results in foaming of the humins as for example described in earlier referred to WO2017074183. The foamed humins are not a preferred treated humins for making fibres. Applicants found that good results in terms of stable fibres are obtained when the thermal treatment results in a treated humins which is not sticky on the one hand and not brittle on the other hand.

The thermal treatment is suitably performed by heating up the humins from a lower temperature, which may be an ambient temperature of between 15 and 25 °C to the treating temperature wherein the temperature is increased at a rate of below 15 °C per minute and preferably below 10 ºC per minute. After keeping the humins at the treating temperature for a sufficient period of time the temperature is suitably decreased at a rate of between 1 and 3 °C per minute to a temperature of below 100 °C.

The humins are preferably thermally treated at the treating temperature for a period of time in the range from equal to or more than 15 minutes, more preferably equal to or more than 30 minutes, even more preferably equal to or more than 45 minutes, to equal to or less than 90 minutes, more preferably to equal to or less than 70 minutes. Most preferably the humins are treated at the treating temperature for a period of time in the range from 55 to 65 minutes.

Advantageously, the humins can be thermally treated at an ambient pressure (corresponding to about 0.1 MegaPascal).

The atmosphere in which the thermal treatment takes place is not critical. The thermal treatment may take place in an inert atmosphere. That would mean that the atmosphere does not contain any oxygen. Such inert atmosphere may e.g. comprise nitrogen, helium, neon, argon, carbon dioxide and combinations thereof. However, the application of such an atmosphere adds to the complexity of the process whilst the use thereof does not entail a major advantage. It has been found that when the heating of the humins is carried out in an oxygen-containing atmosphere, such as air, no significant oxidation of the humins takes place. Therefore, the heating of the humins preferably takes place in an oxygen-containing gas in order to simplify the process. Suitable oxygen-containing gas includes air or oxygen-depleted air, such as combustion off-gas. It may be advantageous to apply a flow of gas during the thermal treatment. By the flow of gas, e.g. an air flow, any volatile compound is removed from the humins.

The invention is also directed to a process to prepare a fibre composed of humins and 5-methoxy-methylfurfural or a fibre composed of humins and 5-ethoxy-methylfurfural by,
(a) reacting a fructose-containing starting material with methanol or ethanol as reactant in the presence of a, preferably homogeneous, acid catalyst thereby obtaining a humins fraction and 5-methoxy-methylfurfural or 5-ethoxy-methylfurfural,
(b) separating the 5-methoxy-methylfurfural or 5-ethoxy-methylfurfural from the humins fraction,
(c) keeping the humins, preferably for between 55 and 65 minutes, at a treating temperature of between 150 and 170 ºC to obtain heat treated humins, and
(d) spinning a fibre composed of humins from the heat treated humins.

For the above process the earlier described preferences also apply.

The above process can advantageously provide a fibre composed of humins and optionally 5-methoxy-methylfurfural or a fibre composed of humins and optionally 5-ethoxy-methylfurfural.

More preferably the process is a process to prepare a fibre and 5-methoxy-methylfurfural or a fibre and 5-ethoxy-methylfurfural by,
(a) reacting a fructose and/or glucose-containing starting material with methanol or ethanol as reactant in the presence of a catalytic or sub- stoichiometric amount of a, preferably homogeneous, acid catalyst thereby obtaining 5-methoxy-methylfurfural or 5-ethoxy-methylfurfural and a humins fraction,
(b) separating the 5-methoxy-methylfurfural or 5-ethoxy-methylfurfural from the humins fraction,
(c) keeping the humins at a treating temperature of between 150 and 170 ºC to obtain heat treated humins, and
(d) spinning a fibre from the heat treated humins

The terms "heat treatment", respectively "heat treated", and the terms "thermal treatment", respectively "thermally treated" have been used herein interchangeably.

It has further been found that it is also possible to apply a lower temperature than described above in the thermal treatment by performing the thermal treatment at a reduced pressure. When a reduced pressure is applied during the thermal treatment, the humins can advantageously be thermally treated at a treating temperature in the range from equal to or more than 110 ºC to equal to or less than 150 ºC, and preferably in the range from equal to or more than 120 °C to equal to or less than 140 °C, more preferably equal to or less than 130 °C. Preferably such thermal treatment at reduced pressure is carried out at a pressure in the range from equal to or more than 0.0001 MegaPascal (corresponding to about 1 millibar) to less than 0.1 MegaPascal, more preferably in the range from equal to or more than 0.0001 MegaPascal to less than 0.01 MegaPascal. When such thermal treatment is carried out at reduced pressure, the humins are preferably thermally treated at the treating temperature for a period of time in the range from equal to or more than 1 hour to equal to or less than 16 hours, more preferably in the range from equal to or more than 2 hours to equal to or less than 8 hours.

The invention therefore further provides a process to prepare a fibre and 5-methoxy-methylfurfural or a fibre and 5-ethoxy-methylfurfural by,
(i) reacting a fructose and/or glucose-containing starting material with methanol or ethanol as reactant in the presence of a catalytic or sub- stoichiometric amount of a, preferably homogeneous, acid catalyst thereby obtaining 5-methoxy-methylfurfural or 5-ethoxy-methylfurfural and a humins fraction,
(ii) separating the 5-methoxy-methylfurfural or 5-ethoxy-methylfurfural from the humins fraction,
(iii) keeping the humins at a treating temperature of between 110 and 150 ºC at a pressure below 0.1 MegaPascal to obtain thermally treated humins, and
(iv) spinning a fibre from the thermally treated humins.

The fibres may be prepared from the humins and preferably the thermally treated humins by preferably melt spinning. In such a melt spinning process the humins are liquified and forced through a small opening. The temperature of the liquid humins is suitably between 140 and 160 ºC. Suitably the time at which the humins are liquified is kept as short as possible such to avoid that the humins chemically alters and negatively influences the quality of the resultant fibre. Such residence times are preferably in the range of a few minutes. For example in the range of 15 seconds to 10 minutes, more preferably in the range from 0.5 minute to 5 minutes. By rapidly cooling and solidifying the stream of humins, a fibre of humins is obtained. Cooling may be against the surrounding gaseous environment, such as ambient air, or against a cold surface. Such a cold surface may be a well-known spinning drum. The spinning apparatus may be any one known suitable for preparing fibres by means of a melt spinning process. A suitable apparatus for preparing fibres on a small scale is for example those known for making cotton candy. Such machines include a spinning head enclosing a small bowl into which a charge of granulated humins is poured. Heaters near the rim of the head melt the humins, which is squeezed out through the tiny holes, having a diameter of for example 700 µm, by centrifugal force. The humins quickly solidify when discharged from these holes to form a network of non-woven fibres of humins.

The fibres composed of humins may be obtained as a non-woven of fibres, suitably having a diameter of between 1 and 300 µm, more preferably of between 10 and 260 µm or may be spun into a yarn of interlocked fibres composed of humins.

The fibres according to this invention can be used in a wide variety of applications. In a first application, it can be used as substrate for plant growth. The non-woven structure provides for a suitable substrate wherein the roots of plants can get a firm grip. To the fibres other biomass may be added which may provide nutrients for the plants, improve water adsorption capacity and/or improve the structural strength of the non-woven fibres. Such other biomass may be for example hemp, nettle, starch, straw, hay, dried manure, for example from horses, pigs and cows and spent mushroom substrate. An advantage of using the invented fibres optionally in combination with the biomass is that they are biodegradable or alternatively they may be burned to obtain combustion energy. Such combustion is not possible with for example the non-biodegradable rock wool which is currently widely used as substrate for plant growth.

The fibres and especially the non-woven fibres according to this invention may also be used as part of insulating products, like for example insulating panels. The fibres may be used as a substitute for rock wool which is currently used as part of such products.

The fibres may also be used to prepare carbon fibres by carbonization of the fibres. The fibres may be a good alternative for the currently used polyacrylonitrile fibres.

The invention will be illustrated by the following non-limiting examples.

### EXAMPLE 1 (Thermal treatment at ambient pressure)

A first batch of humins was obtained from the dehydration of a fructose/glucose mixture in methanol, generally in accordance with the procedure described in WO2007/104514. More specifically such first batch of humins was obtained as a by-product in a (dehydration) process to prepare 5-methoxy-methylfurfural from such fructose/glucose mixture with methanol.

Separate portions of this batch of humins were heated from ambient to between 150 and 200 ºC (experiments 1 to 4), in an oven, whilst flow of air was applied through the oven. As a consequence of the air flow, an ambient pressure was present, corresponding to about 0.1 MegaPascal). The heating rate in the oven was 6 ºC/min. When the desired temperature was reached, the humins fraction was maintained at the specified temperature for one hour, and then allowed to cool. When the temperature was below 100 ºC the sample was taken out of the oven and allowed to cool to room temperature. Subsequently, the material was crushed and, optional, shaped to roughly the same size as sugar used for making cotton candy.

Next, the different batches were subjected to treatment with a commercial candy floss machine (Combisteel type 7455 0800). The diameter of the openings in the machine were measured to be 700 µm. Heat-treated humins were applied in the candy floss machine at 150 °C of the spinning head. After spinning the obtained fibres were subjected to chemical (and physical) analysis.

The batch of humins, the four thermally treated humins fractions and the fibres obtained in Experiment 1 were analysed for 5-hydroxymethylfurfural (HMF), 5-methoxy-methylfurfural (MMF), levulinic acid (LA) and atomic content (in %) of C, H and O. The results are presented in the below Table 1.

**Table 1**

| Experiment | temperature of thermal treatment (ºC) | HMF (wt%) | MMF (wt%) | LA (wt%) | C | H | O |
|---|---|---|---|---|---|---|---|
| 1^{st} batch of humins (feed) | | 10.93 | 1.66 | 1.41 | 54.6 | 5.7 | 39.5 |
| 1 | 160 | 7.06 | 1.44 | 1.08 | 55.9 | 5.5 | 38.1 |
| 2 | 170 | n.d. | n.d. | n.d. | 57.0 | 5.3 | 37.5 |
| 3 | 180 | n.d. | n.d. | n.d. | 58.1 | 5.2 | 36.3 |
| 4 | 200 | n.d. | n.d. | n.d. | 59.6 | 5.1 | 34.9 |
| Fibres obtained from treated humins of exp. 1 | | 6.48 | 0.29 | 0 | 55.4 | 5.6 | 38.4 |

| | | | | | | | |
|---|---|---|---|---|---|---|---|
| n.d.= Not determined | | | | | | | |

The humins that were thermally treated at a temperature above 170 ºC were too condensed to be analysed for monomeric compounds. In addition, spinning of these humins resulted in chunks rather than fibres. Spinning of the thermally treated humins obtained when thermally treating at below 150 ºC resulted in non-stable fibres which liquefied at ambient temperature.

### EXAMPLE 2 (comparative)

A batch of humins was obtained from the dehydration of glucose in water, generally in accordance with the procedure described by the earlier referred to article of Van Zandvoort et al. When a spoon full of these HMF-based humins was put applied in a candy floss machine, no excretion was detected. After cooling, the spinning compartment was dismantled. The humins inside the spinning compartment seemed unchanged.

### EXAMPLE 3 (Thermal treatment at reduced pressure)

A second batch of humins was obtained from the dehydration of a fructose/glucose mixture in methanol, generally in accordance with the procedure described in WO2007/104514. A first batch of humins was obtained from the dehydration of a fructose/glucose mixture in methanol, generally in accordance with the procedure described in WO2007/104514. More specifically such first batch of humins was obtained as a by-product in a (dehydration) process to prepare 5-methoxy-methylfurfural from such fructose/glucose mixture with methanol.

Separate portions of this second batch of humins were heated at a temperature as specified below in Table 2 (experiments 5 and 6), in a vacuum oven at a reduced pressure of about 10 millibar (corresponding to about 0.001 MegaPascals). The humins fraction was maintained at the specified temperature for a period of time as listed in Table 2, and then allowed to cool to room temperature (about 20 °C).

The material was crushed and shaped roughly to the same size as sugar used for making cotton candy. About a spoon full of the thermally treated and crushed humins were submitted to treatment with the commercial candy floss machine (Combisteel type 7455 0800) of Example 1. The diameter of the openings in the machine were measured to be 700 µm. Heat-treated humins were applied in the candy floss machine at 150 °C of the spinning head.

The results were visually determined and are listed in Table 2.

**Table 2**

| Experiment | Temperature of thermal treatment applied to the humins feed (ºC) | Period of thermal treatment applied to the humins feed (hours) | Visual result after spinning of the thermally treated humins. |
|---|---|---|---|
| 5 | 160 | 1 hour | chunks |
| 6 | 120 | 8 hours | fibres |

In experiment 5, a portion of the humins (the top layer) started to foam during the heat treatment and this foamed part had to be discarded before crushing of the humins and spinning the humins in the candy floss machine. The spinning of the humins in this experiment resulted in chunks rather than fibres.

In experiment 6 the humins were first heated at 120 °C for a time period of about 3 hours. After cooling of it was found that the humins were still liquid. Subsequently the humins were heated at 120 °C for another 5 hours. The heat treatment in experiment 6 resulted in thermally treated humins that could be converted to fibres by melt spinning.

## Claims

1. A fibre composed of humins, wherein the humins are obtained as a by-product in a process to prepare 5-methoxy-methylfurfural or 5-ethoxy-methylfurfural from a fructose and/or glucose-containing starting material with methanol or ethanol.

2. The fibre according to claim 1, wherein the humins are macromolecules containing furfural and hydroxymethylfurfural moieties.

3. The fibre according to claim 1 or 2, wherein the fibre is obtainable by melt spinning of the humins.

4. The fibre according to any one of claims 1 to 3, wherein the humins are obtained as a by-product in a process to prepare 5-methoxy-methylfurfural.

5. The fibre according to any one of claims 1 to 4, wherein the humins as obtained as by-product are first thermally treated at a treating temperature between 150 and 170 °C and subsequently the fibre is obtained by melt spinning of the thermally treated humins.

6. The fibre according to claim 5, wherein the humins are thermally treated by first heating up the humins from a lower temperature to the treating temperature of between 150 and 170 °C wherein the temperature is increased at a rate of below 10 °C per minute.

7. The fibre according to claim 6, wherein the humins are kept at the treating temperature for between 15 and 90 minutes, preferably between 55 and 65 minutes, after which the temperature is decreased at a rate of between 1 and 5 °C per minute to a temperature of below 100 °C.

8. A process to prepare a fibre by melt spinning of humins, wherein the humins are obtained as a by-product in a process to prepare 5-methoxy-methylfurfural or 5-ethoxy-methylfurfural from a fructose and/or glucose-containing starting material and methanol or ethanol.

9. The process according to claim 8, wherein the humins are obtained as a by-product in a process to prepare 5-methoxy-methylfurfural.

10. The process according to any one of claims 8 to 9, wherein the humins as obtained as by-product are first thermally treated at a temperature between 150 and 170 °C and subsequently the fibre is obtained by melt spinning of the thermally treated humins.

11. A process to prepare a fibre and 5-methoxy-methylfurfural or a fibre and 5-ethoxy-methylfurfural by,
(a) reacting a fructose and/or glucose-containing starting material with methanol or ethanol as reactant in the presence of a catalytic or sub-stoichiometric amount of a, preferably homogeneous, acid catalyst thereby obtaining 5-methoxy-methylfurfural or 5-ethoxy-methylfurfural and a humins fraction,
(b) separating the 5-methoxy-methylfurfural or 5-ethoxy-methylfurfural from the humins fraction,
(c) keeping the humins at a treating temperature of between 150 and 170 °C to obtain heat treated humins, and
(d) spinning a fibre from the heat treated humins.

12. A process to prepare a fibre and 5-methoxy-methylfurfural or a fibre and 5-ethoxy-methylfurfural by,
(i) reacting a fructose and/or glucose-containing starting material with methanol or ethanol as reactant in the presence of a catalytic or sub-stoichiometric amount of a, preferably homogeneous, acid catalyst thereby obtaining 5-methoxy-methylfurfural or 5-ethoxy-methylfurfural and a humins fraction,
(ii) separating the 5-methoxy-methylfurfural or 5-ethoxy-methylfurfural from the humins fraction,
(iii) keeping the humins at a treating temperature of between 110 and 150 °C at a pressure below 0.1 MegaPascal to obtain thermally treated humins, and
(iv) spinning a fibre from the thermally treated humins.

13. The process according to claim 11 or 12, wherein in step (a) 5-methoxy-methylfurfural is obtained.

14. The process according to any one of claims 11 to 13, wherein in step (c) the temperature of the humins is raised at a rate of below 10 °C per minute from a lower temperature to the treating temperature and wherein the humins are subsequently cooled at a rate of below 10 °C per minute after keeping the humins at the treating temperature.

15. A product comprising a fibre according to any one of claims 1 to 7 or as obtained according to a process according to any one of claims 8 to 14 for use as a substrate for plant growth.

16. A yarn composed of interlocked fibres according to any one of claims 1 to 7 or as obtained according to a process according to any one of claims 8 to 14.

17. Use of a fibre according to any one of claims 1 to 7 or as obtained according to a process according to any one of claims 8 to 14 as a substrate for plant growth.

## Patentansprüche

1. Faser aus Huminen, wobei die Humine als ein Nebenprodukt in einem Verfahren erhalten werden, um 5-Methoxymethylfurfural oder 5-Ethoxymethylfurfural aus einem Fructose und/oder Glucose enthaltenden Ausgangsmaterial mit Methanol oder Ethanol herzustellen.

2. Faser nach Anspruch 1, wobei die Humine Makromoleküle sind, die Furfural- und Hydroxymethylfurfuralteile enthalten.

3. Faser nach Anspruch 1 oder 2, wobei die Faser durch Schmelzspinnen der Humine erhaltbar ist.

4. Faser nach einem der Ansprüche 1 bis 3, wobei die Humine als ein Nebenprodukt in einem Verfahren erhalten werden, um 5-Methoxymethylfurfural herzustellen.

5. Faser nach einem der Ansprüche 1 bis 4, wobei die Humine, die als Nebenprodukt erhalten werden, zuerst bei einer Behandlungstemperatur zwischen 150 und 170 °C thermisch behandelt werden und anschließend die Faser durch Schmelzspinnen der thermisch behandelten Humine erhalten wird.

6. Faser nach Anspruch 5, wobei die Humine durch zuerst Erwärmen der Humine von einer niedrigeren Temperatur auf die Behandlungstemperatur zwischen 150 und 170 °C thermisch behandelt werden, wobei die Temperatur mit einer Geschwindigkeit von unter 10 °C pro Minute erhöht wird.

7. Faser nach Anspruch 6, wobei die Humine zwischen 15 und 90 Minuten lang, vorzugsweise zwischen 55 und 65 Minuten lang, auf der Behandlungstemperatur gehalten werden, wonach die Temperatur mit einer Geschwindigkeit von zwischen 1 und 5 °C pro Minute auf eine Temperatur unter 100 °C gesenkt wird.

8. Verfahren, um eine Faser durch Schmelzspinnen von Huminen herzustellen, wobei die Humine als ein Nebenprodukt in einem Verfahren erhalten werden, um 5-Methoxymethylfurfural oder 5-Ethoxymethylfurfural aus einem Fructose und/oder Glucose enthaltenden Ausgangsmaterial und Methanol oder Ethanol herzustellen.

9. Verfahren nach Anspruch 8, wobei die Humine als ein Nebenprodukt in einem Verfahren erhalten werden, um 5-Methoxymethylfurfural herzustellen.

10. Verfahren nach einem der Ansprüche 8 bis 9, wobei die Humine, die als Nebenprodukt erhalten werden, zuerst bei einer Temperatur zwischen 150 und 170 °C thermisch behandelt werden und anschließend die Faser durch Schmelzspinnen der thermisch behandelten Humine erhalten wird.

11. Verfahren, um eine Faser und 5-Methoxymethylfurfural oder eine Faser und 5-Ethoxymethylfurfural durch Folgendes herzustellen:
(a) Reagieren eines Fructose und/oder Glucose enthaltenden Ausgangsmaterials mit Methanol oder Ethanol als Reaktanten in der Gegenwart einer katalytischen oder substöchiometrischen Menge eines vorzugsweise homogenen Säurekatalysators, wobei dadurch 5-Methoxymethylfurfural oder 5-Ethoxymethylfurfuralund eine Huminfraktion erhalten wird,
(b) Abtrennen des 5-Methoxymethylfurfural oder 5-Ethoxymethylfurfural von der Huminfraktion,
(c) Halten der Humine bei einer Behandlungstemperatur zwischen 150 und 170 °C, um wärmebehandelte Humine zu erhalten, und
(d) Spinnen einer Faser aus den wärmebehandelten Huminen.

12. Verfahren, um eine Faser und 5-Methoxymethylfurfural oder eine Faser und 5-Ethoxymethylfurfural durch Folgendes herzustellen:
(i) Reagieren eines Fructose und/oder Glucose enthaltenden Ausgangsmaterials mit Methanol oder Ethanol als Reaktanten in der Gegenwart einer katalytischen oder substöchiometrischen Menge eines vorzugsweise homogenen Säurekatalysators, wobei dadurch 5-Methoxymethylfurfural oder 5-Ethoxymethylfurfuralund eine Huminfraktion erhalten wird,
(ii) Abtrennen des 5-Methoxymethylfurfural oder 5-Ethoxymethylfurfural von der Huminfraktion,
(iii) Halten der Humine bei einer Behandlungstemperatur zwischen 110 und 150 °C bei einem Druck unter 0,1 Megapascal, um thermisch behandelte Humine zu erhalten, und
(iv) Spinnen einer Faser aus den thermisch behandelten Huminen.

13. Verfahren nach Anspruch 11 oder 12, wobei in Schritt (a) 5-Methoxymethylfurfural erhalten wird.

14. Verfahren nach einem der Ansprüche 11 bis 13, wobei in Schritt (c) die Temperatur der Humine mit einer Geschwindigkeit von weniger als 10 °C pro Minute von einer niedrigeren Temperatur auf die Behandlungstemperatur gesteigert wird und wobei die Humine anschließend mit einer Geschwindigkeit von unter 10°C pro Minute gekühlt werden, nachdem die Humine auf der Behandlungstemperatur gehalten wurden.

15. Produkt, das eine Faser nach einem der Ansprüche 1 bis 7 umfasst oder wie gemäß einem Verfahren nach einem der Ansprüche 8 bis 14 erhalten wird, zur Verwendung als ein Substrat für Pflanzenwachstum.

16. Garn, das aus verflochtenen Fasern nach einem der Ansprüche 1 bis 7 besteht oder wie gemäß einem Verfahren nach einem der Ansprüche 8 bis 14 erhalten wird.

17. Verwendung einer Faser nach einem der Ansprüche 1 bis 7 oder wie gemäß einem Verfahren nach einem der Ansprüche 8 bis 14 erhalten wird, als ein Substrat für Pflanzenwachstum.

## Revendications

1. Fibre composée d'humines, dans laquelle les humines sont obtenues en tant que sous-produit d'un procédé de préparation du 5-méthoxy-méthylfurfural ou du 5-éthoxy-méthylfurfural à partir d'une matière de départ contenant du fructose et/ou du glucose avec du méthanol ou de l'éthanol.

2. Fibre selon la revendication 1, dans laquelle les humines sont des macromolécules contenant des fragments furfural et hydroxyméthylfurfural.

3. Fibre selon la revendication 1 ou 2, dans laquelle la fibre peut être obtenue par filage à l'état fondu des humines.

4. Fibre selon l'une quelconque des revendications 1 à 3, dans laquelle les humines sont obtenues en tant que sous-produit d'un procédé de préparation du 5-méthoxy-méthylfurfural.

5. Fibre selon l'une quelconque des revendications 1 à 4, dans laquelle les humines obtenues en tant que sous-produit sont d'abord traitées thermiquement à une température de traitement comprise entre 150 et 170 °C et ensuite la fibre est obtenue par filage à l'état fondu des humines traitées thermiquement.

6. Fibre selon la revendication 5, dans laquelle les humines sont traitées thermiquement en chauffant d'abord les humines d'une température inférieure à la température de traitement comprise entre 150 et 170 °C, la température étant augmentée à une vitesse inférieure à 10 °C par minute.

7. Fibre selon la revendication 6, dans laquelle les humines sont maintenues à la température de traitement pendant 15 à 90 minutes, de préférence 55 à 65 minutes, après quoi la température est abaissée à une vitesse comprise entre 1 et 5 °C par minute jusqu'à une température inférieure à 100 °C.

8. Procédé de préparation d'une fibre par filage à l'état fondu d'humines, dans lequel les humines sont obtenues en tant que sous-produit d'un procédé de préparation du 5-méthoxy-méthylfurfural ou du 5-éthoxy-méthylfurfural à partir d'une matière de départ contenant du fructose et/ou du glucose et du méthanol ou de l'éthanol.

9. Procédé selon la revendication 8, dans lequel les humines sont obtenues en tant que sous-produit d'un procédé de préparation du 5-méthoxy-méthylfurfural.

10. Procédé selon l'une quelconque des revendications 8 à 9, dans lequel les humines obtenues en tant que sous-produit sont d'abord traitées thermiquement à une température comprise entre 150 et 170 °C et ensuite la fibre est obtenue par filage à l'état fondu des humines traitées thermiquement.

11. Procédé de préparation d'une fibre et du 5-méthoxy-méthylfurfural ou d'une fibre et du 5-éthoxy-méthylfurfural par,
(a) réaction d'une matière première contenant du fructose et/ou du glucose avec du méthanol ou de l'éthanol comme réactif en présence d'une quantité catalytique ou sous-stoechiométrique d'un catalyseur acide, de préférence homogène, obtenant ainsi du 5-méthoxy-méthylfurfural ou du 5-éthoxy-méthylfurfural et une fraction humine,
(b) séparation du 5-méthoxy-méthylfurfural ou du 5-éthoxy-méthylfurfural de la fraction humine,
(c) conservation des humines à une température de traitement comprise entre 150 et 170 °C pour obtenir des humines traitées thermiquement, et
(d) filage d'une fibre à partir des humines traitées thermiquement.

12. Procédé de préparation d'une fibre et du 5-méthoxy-méthylfurfural ou d'une fibre et du 5-éthoxy-méthylfurfural par,
(i) réaction d'une matière première contenant du fructose et/ou du glucose avec du méthanol ou de l'éthanol comme réactif en présence d'une quantité catalytique ou sous-stoechiométrique d'un catalyseur acide, de préférence homogène, obtenant ainsi du 5-méthoxy-méthylfurfural ou du 5-éthoxy-méthylfurfural et une fraction humine,
(ii) séparation du 5-méthoxy-méthylfurfural ou du 5-éthoxy-méthylfurfural de la fraction humine,
(iii) conservation des humines à une température de traitement comprise entre 110 et 150 °C à une pression inférieure à 0,1 mégapascal pour obtenir des humines traitées thermiquement, et
(iv) filage d'une fibre à partir des humines traitées thermiquement.

13. Procédé selon la revendication 11 ou 12, dans lequel à l'étape (a) le 5-méthoxyméthylfurfural est obtenu.

14. Procédé selon l'une quelconque des revendications 11 à 13, dans lequel à l'étape (c) la température des humines est augmentée à une vitesse inférieure à 10 °C par minute d'une température inférieure à la température de traitement et dans lequel les humines sont ultérieurement refroidies à une vitesse inférieure à 10 °C par minute après avoir conservé les humines à la température de traitement.

15. Produit comprenant une fibre selon l'une quelconque des revendications 1 à 7 ou obtenu selon un procédé selon l'une quelconque des revendications 8 à 14 pour une utilisation en tant que substrat pour la croissance des plantes.

16. Fil composé de fibres entrecroisées selon l'une quelconque des revendications 1 à 7 ou obtenu selon un procédé selon l'une quelconque des revendications 8 à 14.

17. Utilisation d'une fibre selon l'une quelconque des revendications 1 à 7 ou obtenue selon un procédé selon l'une quelconque des revendications 8 à 14 en tant que substrat pour la croissance des plantes.
